**Europäisches Patentamt**

**European Patent Office**

**Office européen des brevets**

(19)

(11) Veröffentlichungsnummer: **0 101 088**
**B1**

(12) # EUROPÄISCHE PATENTSCHRIFT

(45) Veröffentlichungstag der Patentschrift:
27.04.88

(21) Anmeldenummer: **83108021.3**

(22) Anmeldetag: **12.08.83**

(51) Int. Cl.⁴: **B 01 D 53/34**, F 23 J 15/00

(54) **Verfahren und Vorrichtung zum Reinigen von Pyrolysegasen.**

(30) Priorität: **16.08.82 DE 3230472**

(43) Veröffentlichungstag der Anmeldung:
**22.02.84 Patentblatt 84/8**

(45) Bekanntmachung des Hinweises auf die Patenterteilung:
**27.04.88 Patentblatt 88/17**

(84) Benannte Vertragsstaaten:
**AT BE CH FR GB IT LI NL**

(56) Entgegenhaltungen:
**DE-A-2 952 642**
**DE-A-3 003 124**
**DE-C-168 344**

(73) Patentinhaber: **Deutsche Kommunal- Anlagen Miete GmbH, c/o Deutsche Anlagen- Leasing GmbH Wilhelm- Theodor- Römheld- Strasse 30, D-6500 Mainz (DE)**

(72) Erfinder: **Hillekamp, Klaus, Dr., Musäusstrasse 3, D-8000 München 60 (DE)**

(74) Vertreter: **Tetzner, Volkmar, Dr.- Ing. Dr. jur., Van- Gogh- Strasse 3, D-8000 München 71 (DE)**

## Beschreibung

Die Erfindung betrifft ein Verfahren (entsprechend dem Oberbegriff des Anspruches 1) sowie eine Vorrichtung (gemäß dem Oberbegriff des Anspruches 3) zum Reinigen von Pyrolysegas.

Pyrolysegase, wie sie beispielsweise bei der Pyrolyse von Abfallstoffen, wie Hausmüll, Sondermüll und Schlämmen anfallen, enthalten gewöhnlich zahlreiche Verunreinigungen bzw. Schadstoffe, und zwar insbesondere Staub, Chlor, Fluor, Stickstoff, Schwefelverbindungen sowie Kohlenwasserstoffe. Chlorverbindungen fallen beispielsweise bei der Pyrolyse von Kunststoff, insbesondere Polyvinylchlorid, an.

Die Reinigung der Pyrolysegase ist deshalb problematisch, weil sie neben Permanentgasen auch kondensierbare Bestandteile, nämlich verschiedene Kohlenwasserstoffe, enthalten.

Nimmt man eine Temperaturverringerung der Gase vor, um sie üblichen Reinigungseinrichtungen zuführen zu können, so führt dies zur Kondensation der Kohlenwasserstoffe in Form von Ölen und Teeren, die die Einrichtungen verkleben und verstopfen. Übliche Reinigungseinrichtungen sind deshalb nicht einsetzbar.

Durch die DE-A-2 952 642 ist bereits ein Verfahren entsprechend dem Oberbegriff des Anspruches 1 sowie eine Vorrichtung gemäß dem Oberbegriff des Anspruches 3 bekannt. Hierbei sind zwei Schüttschichtfilter im Gasstrom hintereinander angeordnet: eine umlaufende Kugelmühle enthält eine Filterschicht, in der eine erste Reaktion der als Reinigungsmittel zugesetzten Additive mit den im Rohgas enthaltenen Schadstoffen erfolgt. In einem nachgeschalteten horizontalen Schüttschichtfilter werden sodann die mitgeführten Additive mit den im Rohgas noch enthaltenen Restschadstoffen zur Reaktion gebracht.

Nachteilig ist hierbei, daß immer umgesetztes Reinigungsmittel in der Vorrichtung verbleibt, daß die Filterwirkung begrenzt ist und daß eine Regenerierung der Schüttschichtfilter erforderlich ist.

Der Erfindung liegt die Aufgabe zugrunde, ein Verfahren entsprechend dem Oberbegriff des Anspruches 1 sowie eine Vorrichtung gemäß dem Oberbegriff des Anspruches 3 so auszubilden, daß sich eine einfache Verfahrensführung und eine gute Reinigungswirkung ergeben.

Diese Aufgabe wird erfindungsgemäß durch die kennzeichnenden Merkmale des Anspruches 1 bzw. 3 gelöst.

Erfindungsgemäß werden somit die Körner des Schüttschichtfilters mittels eines Rührers bewegt, dessen Rührgeschwindigkeit in Abhängigkeit vom Druckabfall im Schüttschichtfilter derart geregelt wird, daß sich eine konstante Druckdifferenz zwischen der Filtereintrittsseite und der Filteraustrittsseite ergibt.

Eine solche Verfahrensweise gewährleistet im Filtersystem eine konstante Gasgeschwindigkeit, da ein Zusetzen des Filters durch Ruß, Staub und Reaktionsprodukte vermieden wird. Die konstante Gasgeschwindigkeit im Filtersystem gewährleistet immer eine hohe Stoßzahl zwischen Reinigungsmittel und Schadstoffteilchen.

Die erfindungsgemäße Vorrichtung kann ohne Schwierigkeiten bei hoher Temperatur, nämlich der Herstellungstemperatur der Pyrolysegase, betrieben werden, so daß eine Kondensation der im Schwefelgas enthaltenen Kohlenwasserstoffe hintangehalten wird und die Anlage über lange Zeit betriebssicher arbeitet, da ein Verkleben oder Verstopfen durch Kondensationsprodukte nicht erfolgt.

Vorzugsweise ist dem Schüttschichtfilter eine Entstaubungseinrichtung, wie beispielsweise ein Zyklon oder ein weiterer Filter, nachgeschaltet. Die getrennt vorgesehene Entstaubungseinrichtung bringt den Vorteil mit sich, daß sie auf die eigentliche Entstaubung optimiert werden kann, da sie andere Aufgaben nicht übernehmen muß.

Die Verwendung eines Schüttschichtfilters, dessen Körner mittels eines Rührers bewegt werden, ermöglicht es, die Anzahl der Stöße zwischen dem Reinigungsmittel und den aus dem Pyrolysegas zu entfernenden Substanzen wesentlich zu erhöhen und dadurch die Reinigungswirkung erheblich zu steigern.

Das Schüttschichtfilter reinigt sich hierbei selbst. Eine gesonderte Abreinigungsphase, bei der immer ein Schadstoffdurchtritt erfolgt, entfällt daher.

Das gesamte Schüttschichtfilter nimmt am Reinigungsprozeß gleichmäßig teil, wodurch eine hohe spezifische Reinigungsleistung pro Volumeneinheit erreicht wird. Erzielt wird auch eine Pufferkapazität in der Filterschicht bei Schadstoffspitzenbelastungen.

Das erfindungsgemäße Verfahren eignet sich grundsätzlich zur Entfernung jeglicher Art von Verunreinigungen aus heißen Pyrolysegasen, einschließlich sauren und basischen Verunreinigungen sowie Schwermetallen. Besonders geeignet ist das Verfahren jedoch zur Entfernung der sauren Verunreinigungen des Pyrolysegases, insbesondere Chlor-, Fluor- und Schwefelverbindungen, wobei Salzsäuregas, das bei der Pyrolyse von Chlor enthaltenden Kunststoffen anfällt, sowie Schwefelwasserstoff und Schwefeldioxid, die bei der Pyrolyse von Sondermüll, wie z. B. Reifen und Säureharzen anfallen, die vordringlich zu entfernenden Verbindungen darstellen.

Zur Entfernung der sauren Bestandteile und insbesondere der gasförmigen Salzsäure wird als Reinigungsmittel zweckmäßig Calciumhydroxid verwendet, und zwar in feinverteilter Form.

Das Calciumhydroxid wird dem Pyrolysegasstrom aufgegeben, wobei eine turbulente Vermischung von Gas und Reinigungsmittel angestrebt wird, so daß die gewünschte Reaktion der Salzsäure mit dem Calciumhydroxid zu Calciumchlorid und Wasser sowie der anderen Bestandteile beginnt und eine gleichmäßige Verteilung des Reinigungsmittels auf dem Schüttschichtfilter erfolgt, wo die weitere Umsetzung stattfindet.

Eine optimale Beladung des Gasstroms mit Reinigungsmittel ist dann gegeben, wenn das stöchiometrische Verhältnis zwischen den zu entfernenden sauren Schadstoffen, insbesondere Salzsäure, und dem Reinigungsmittel, vorzugsweise Calciumhydroxid, im Bereich von 0,25 bis 10, vorzugsweise 0,5 bis 5, liegt, d. h. das Reinigungsmittel liegt im 0,25 bis 10fachen Überschuß vor.

Die Dosierung des Reinigungsmittels kann in Abhängigkeit vom Schadstoffgehalt im Pyrolysegas oder Reingas, auch nach Verbrennung, geregelt werden.

Als Material für den Schüttschichtfilter kommen üblicherweise eingesetzte Quarzkiese in Betracht; es werden jedoch vorzugsweise körnige basische Stoffe, insbesondere Calciumcarbonat und Calciumoxid verwendet. Diese sind im Gegensatz zu Quarz kein totes Trägermaterial, sondern reagieren selbst mit Salzsäure und anderen sauren Bestandteilen und nehmen somit an der Reinigung der Pyrolysegase aktiven Anteil. Ferner setzt sich Calciumhydroxid an Calciumcarbonat und Calciumoxid besser fest.

Als Filtermaterial eignen sich generell Alkali- und Erdalkaliverbindungen, insbesondere Alkalicarbonate und Magnesiumcarbonat. Auch Aluminiumverbindungen, insbesondere Aluminiumoxid, Hämatit, Phosphate und saure Erden sowie Mischungen der vorgenannten Stoffe können eingesetzt werden.

Es wird bevorzugt, das Calciumcarbonat in einer Korngröße im Bereich von 3 bis 5 mm einzusetzen, wobei es besonders vorteilhaft ist, ein gebrochenes Kalksteinkorn, d. h. ein scharfkantiges, spitzes Korn mit rauher Oberfläche einzusetzen, an dem das zugesetzte pulverförmige Reinigungsmittel hängenbleibt. Hierdurch wird die Verweilzeit des Reinigungsmittels in der Schüttschicht vergrößert.

Wesentlich ist, daß die Körner des Schüttschichtfilters ständig bewegt werden und sich damit auch die einzelnen Reinigungsmittelteilchen während des Reinigungsvorgangs gegenüber dem Gasstrom bzw. den Schadstoffteilchen ständig bewegen.

Damit wird einerseits erreicht, daß das Schüttgut einschließlich des darin enthaltenen Staubes und Rußes sowie des umgesetzten oder nicht umgesetzten Reinigungsmittels stets über den Filterquerschnitt gleichmäßig verteilt ist und sich keine Strähnen und Staubkonzentrationen in irgendeinem Bereich bilden und daß durch die Reibung der Bestandteile gegeneinander in der Schüttschicht neue Oberflächen geschaffen werden.

Die zu entfernenden Bestandteile treffen daher beim Durchgang durch die Filterschicht stets auf neues reaktives Material, wodurch der Abscheidegrad für die Schadstoffe wesentlich erhöht wird.

Es ist aber andererseits auch wesentlich, daß die Körner des Schüttschichtfilters durch den Rührer senkrecht zur Filterebene bewegt werden, d. h. hochgehoben und fallengelassen werden. Dadurch wird ein Zusetzen des Filters durch Ruß, Staub und Reaktionsprodukte vermieden.

Filterschichthöhen im Bereich zwischen 50 und 200 mm werden bevorzugt.

Zwischen Filtereintrittsseite und Filteraustrittsseite herrscht eine Druckdifferenz, die von der Dicke und Dichte der Filterschicht abhängt. Durch Änderung der Dichte der Filterschicht, beispielsweise durch Veränderung der Drehzahl eines Rührers, läßt sich die Druckdifferenz variieren. Wie bereits erläutert, wird das erfindungsgemäße Verfahren stets bei konstanter Druckdifferenz geführt, indem die Rührerdrehzahl in Abhängigkeit von der gemessenen Druckdifferenz geregelt wird. Im Filtersystem herrscht dann konstante Gasgeschwindigkeit, so daß immer eine hohe Stoßzahl zwischen Reinigungsmittel und Schadstoffteilchen gewährleistet ist.

Die Beladung der Schüttschicht mit Reinigungsmittel kann durch Dosierung sowie Änderung der Rührgeschwindigkeit in weiten Grenzen variiert werden, womit man sich dem Schadstoffgehalt des Gases anpassen kann.

Vorzugsweise liegt die Rührerdrehzahl im Bereich von 1 bis 10 U/min.

Der im Pyrolysegas enthaltene feine Staub sowie Ruß durchwandern langsam den Schüttschichtfilter und finden sich im austretenden Reingas. Bei der ständigen Bewegung der Filterkörner erfolgt eine Art Mahlvorgang. Die Spitzen und Kanten der Körner werden abgeschliffen. Der feine Staub durchwandert gleichfalls den Filter. Von besonderer Bedeutung ist die Bewegung der Körner jedoch deshalb, wird das an der Außenseite vorliegende Reaktionsprodukt, also im wesentlichen Calciumchlorid, ständig abgerieben wird, so daß stets eine neue Kontaktoberfläche zur Verfügung steht. Auch dieses abgemahlene feine Reaktionsprodukt durchwandert den Filter.

Das den Filter verlassende Gas ist rein in Bezug auf die zu entfernenden Bestandteile, enthält jedoch noch Staub aus den vorgenannten Materialien. Es wird deshalb bevorzugt, dem Filter eine Entstaubungseinrichtung nachzuschalten. Dies kann wiederum ein Kiesfilter sein. Vorzugsweise wird jedoch ein Zyklon eingesetzt.

Der von dem Gas mitgeführte Teil an Filtermaterial wird stetig ersetzt, wobei kontinuierlich oder diskontinuierlich zugeführt werden kann.

Die Temperatur hängt von der Gasherstellungstemperatur ab und liegt üblicherweise zwischen 250 und 600° C.

Wie dargelegt, eignet sich das erfindungsgemäße Verfahren insbesondere zur Entfernung von sauren Verunreinigungen aus den Pyrolysegas, wobei vorzugsweise Calciumhydroxid als Reinigungsmittel und Calciumcarbonat als Filtermaterial vorgesehen werden.

Es können aber auch andere Reinigungsmittel, wie Alkali- und Erdalkaliverbindungen, insbesondere Calciumcarbonat, Calciumoxid, Alkalicarbonate, Magnesiumcarbonat, Hämatit, Aluminiumverbindungen, insbesondere Aluminiumoxid und Phosphate sowie Mischungen der genannten Stoffe eingesetzt werden und als Filtermaterial kommen auch übliche Quarzkiese und anderes in Betracht. Zur Entfernung von basischen Verunreinigungen können saure Erden, z. B. Montmorillonit und Bentonite verwendet werden. Die Reinigungsmittel sind vorzugsweise pulverförmig.

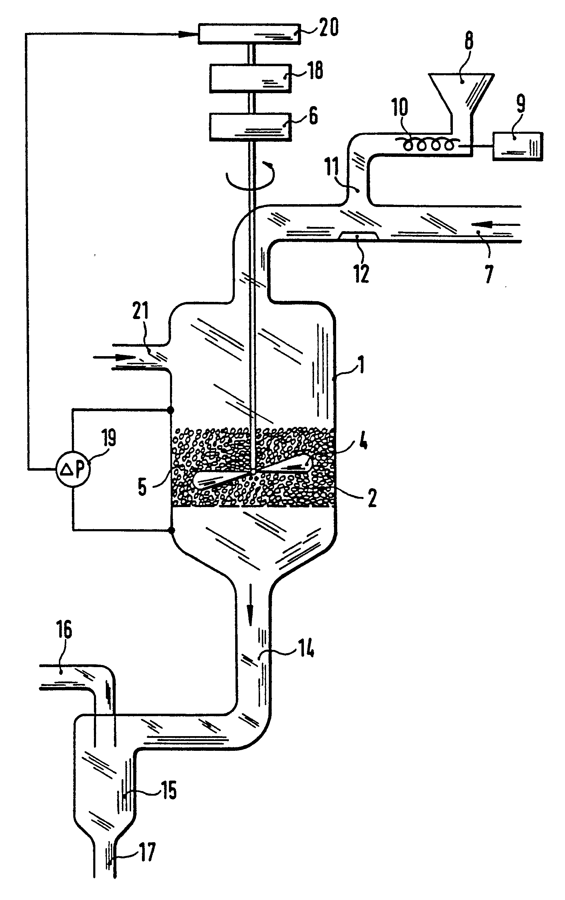

Die Erfindung wird nachstehend anhand der Zeichnung, die eine bevorzugte Ausführungsform zeigt, näher erläutert.

Die einzige Figur zeigt eine schematische Darstellung der erfindungsgemäßen Vorrichtung.

Über einen Gaseinlaß 7 wird das Pyrolysegas durch den in einem Gehäuse 1 angeordneten Schüttschichtfilter 2 geführt.

Das Reinigungsmittel wird von der Reinigungsmittelzufuhr 8 beispielsweise mittels einer mit Motor 9 angetriebenen Förderschnecke 10 bei Eintrittsöffnung 11 dem Gasstrom zugeführt. Leitelemente 12 bewirken eine innige Vermischung von Reinigungsmittel und Gas.

Die Körner 5 des Schüttschichtfilters 2 werden durch einen Rührer 4 ständig bewegt, so daß deren gleichmäßige Verteilung über den Filterquerschnitt gewährleistet ist.

Der Rührmotor 6 weist vorzugsweise ein regelbares Getriebe auf, das über Rechner 20 und Regler 18 geregelt wird. Das Verfahren wird bei konstantem Druckabfall zwischen Filtereintrittsseite und Filteraustrittsseite geführt, der mit dem Druckmeßgerät 19 gemessen wird. Der gemessene Wert wird dem Rechner 20 zur Regelung der Drehzahl des Rührers 4 eingegeben.

Bei der Filterkörner-Zuführ 21 werden kontinuierlich oder diskontinuierlich die ausgetragenen Filterkörner ersetzt. Im Auslaß 14 findet sich reines Gas, das jedoch noch Staubpartikel enthält. Diese werden in der Entstaubungsreinrichtung 15, beispielweise in einem Zyklon oder in Multizyklonen, entfernt und bei 17 ausgetragen, während das reine und auch entstaubte Gas die Vorrichtung bei 16 verläßt.

Die Erfindung wird nachstehend anhand eines Beispiels näher erläutert.

## Beispiel

Es wurde ein Filter mit einem Innendurchmesser von 450 mm und einer Schichthöhe von 150 mm verwendet, der kontinuierlich mit einen Rührwerk gerührt wurde.

Als Filtermaterial wurde Weißkalk verwendet.

Über einen Vorratsbehälter wurde kontinuierlich Calciumhydroxid in einer Menge von 3000g Calciumhydroxid je Stunde zudosiert. Die durchgesaugte Gasmenge betrug etwa 805 m³h BZ bei 430° C Pyrolysegas aus Holzabfällen, denen Polyvinylchloridpulver zugesetzt worden war.

Gemessen wurde der HCl-Gehalt am Filtereintritt und Filteraustritt. Der HCl-Gehalt wurde über zwei Waschflaschen gemessen, denen eine weitere Flasche mit Glasfaserfilter zur Abscheidung der Chloride vorgeschaltet war. Der Inhalt der Waschflaschen wurde titriert.

Die Messung ergab im Rohgas 1973,1 mg $HCL/m^3$ NZ und im Reingas 16,5 mg $HCl/m^3$ NZ. Der Abscheidegrad bezüglich HCl betrug somit 99,2 %.

## Patentansprüche

1. Verfahren zum Reinigen von Pyrolysegas, wobei

a) das Pyrolysegas mit einem teilchenförmigen Reinigungsmittel beaufschlagt und

b) durch ein Schüttschichtfilter (2) geführt wird, dessen Körner kontinuierlich bewegt werden,

dadurch gekennzeichnet, daß

c) die Körner des Schüttschichtfilters (2) mittels eines Rührers (4) bewegt werden, dessen Rührgeschwindigkeit in Abhängigkeit vom Druckabfall im Schüttschichtfilter derart geregelt wird, daß sich eine konstante Druckdifferenz zwischen der Filtereintrittseite und der Filteraustrittsseite ergibt.

2. Verfahren nach Anspruch 1, dadurch gekennzeichnet, daß die Rührgeschwindigkeit im Bereich von 1 bis 10 U/min liegt.

3. Vorrichtung zum Reinigen von Pyrolysegas, enthaltend

a) eine Einrichtung (8, 9, 10) zur Beaufschlagung des Pyrolysegases mit einem teilchenförmigen Reinigungsmittel,

b) ein Schüttschichtfilter (2), durch das das mit dem Reinigungsmittel beaufschlagte Pyrolysegas geführt wird,

c) eine Einrichtung (4) zur kontinuierlichen Bewegung der Körner des Schüttschichtfilters (2),

gekennzeichnet durch

d) einen die Einrichtung (4) zur kontinuierlichen Bewegung der Körner des Schüttschichtfilters (2) bildenden Rührer mit regelbarer Rührgeschwindigkeit,

e) ein Druckmeßgerät (19) zur Messung des Druckabfalls zwischen der Eintritts- und Austrittsseite des Schüttschichtfilters (2),

f) einen über einen Rechner (20) an das Druckmeßgerät (19) angeschlossenen Regler (18), der die Drehzahl des mit einem regelbaren Getriebe versehenen Motors (6) des Rührers (4) in Abhängigkeit vom Druckabfall im Schüttschichtfilter (2) derart regelt, daß sich eine konstante Druckdifferenz zwischen der Eintritts- und Austrittsseite des Schüttschichtfilters ergibt.

**Revendications**

1. Procédé pour purifier les gaz de pyrolyse, suivant lequel:
a) un produit de purification sous forme de particules est projeté sur le gaz de pyrolyse et
b) dirigé à travers un filtre (2) formé d'un lit tassé et dont les grains subissent une agitation continue,
caractérisé en ce que:
c) les grains du filtre (2) formé d'un lit tassé sont mis en mouvement au moyen d'un agitateur (4) dont la vitesse est réglée en fonction de la chute de tension dans ledit filtre, de manière que la différence de pression entre le côté entrée et le côté sortie de ce filtre soit constante.

2. Procédé selon la revendication 1, caractérisé en ce que la vitesse de l'agitateur est comprise dans une plage allant de 1 à 10 tours à la minute.

3. Dispositif pour purifier les gaz de pyrolyse, comprenant:
a) un appareillage (8, 9, 10) de projection d'un produit de purification particulaire sur le gaz de pyrolyse,
b) un filtre (2) formé d'un lit tassé à travers lequel est dirigé le gaz de pyrolyse sur lequel a été projeté le produit de purification,
c) un appareillage (4) de mise en mouvement continu des grains du filtre (2),
caractérisé par:
d) un agitateur à vitesse réglable qui forme l'appareillage (4) de mise en mouvement continu des grains du filtre (2) formé d'un lit tassé,
e) un manomètre (19) de mesure de la chute de pression entre le côté entrée et le côté sortie dudit filtre (2),
f) un régulateur (18) connecté par l'intermédiaire d'une calculatrice (20) au manomètre (19) et réglant la vitesse de rotation du moteur (6) de l'agitateur (4), qui est équipé d'un train d'engrenages réglable, en fonction de la chute de pression dans le filtre (2) formé d'un lit tassé, de manière que la différence de pression entre le côté entrée et le côté sortie du filtre soit constante.

**Claims**

1. Process for purifying pyrolysis gas in which
a) the pyrolysis gas is acted upon by a particulate purifying agent and
b) is guided through a bulk layer filter (2) the grains of which are continuously moved,
characterised in that
c) the grains of the bulk layer filter (2) are moved by means of a stirrer (4), the stirring speed of which is regulated as a functian of the pressure drop in the bulk layer filter in such a way as to produce a constant pressure difference between the inlet side and the outlet side of the filter.

2. Process as claimed in claim 1, characterised in that the stirring speed lies in the range from 1 to 10 r. p.m.

3. Apparatus for purifying pyrolysis gas, containing
a) an arrangement (8, 9, 10) for acting on the pyrolysis gas with a particulate purifying agent,
b) a bulk layer filter (2) through which the pyrolysis gas acted upon by the purifying agent is passed,
c) an arrangement for the continuous movement of the grains of the bulk layer filter (2), characterised by
d) a stirrer with regulable stirring speed which constitutes an arrangement (4) for the continuous movement of the grains of the bulk layer filter (2),
e) a pressure meter (19) for measuring the pressure drop between the inlet side and the outlet side of the bulk layer filter (2),
f) a regulator (18) which is connected to the pressure meter (19) via a computer (20) and by means of which the speed of the motor (6) of the stirrer (4) which is provided with a regulable gear is regulated as a function of the pressure drop in the bulk layer filter (2) in such a way that a constant pressure difference between the inlet side and the outlet side of the bulk layer filter is produced.